# FASCICULE DE BREVET EUROPEEN

(11) **EP 4 301 637 B1**
(45) Date de publication et mention de la délivrance du brevet: **11.11.2026**
(21) Numéro de dépôt: 22707777.3
(22) Date de dépôt: 28.02.2022
(51) Int. Cl.: B60S 1/52, B60S 1/56

(54) **DISPOSITIF DE NETTOYAGE DE SURFACE PAR JET DÉVIÉ MOBILE**
VORRICHTUNG ZUR REINIGUNG EINER OBERFLÄCHE MITTELS EINES BEWEGLICHEN ABGELENKTEN STRAHLS
DEVICE FOR CLEANING A SURFACE BY MEANS OF A MOVABLE DEFLECTED JET

(30) Priorité: 01.03.2021 FR 2101944
(43) Date de publication de la demande: 10.01.2024
(73) Titulaire: VALEO SYSTEMES D'ESSUYAGE, 78322 Le Mesnil Saint Denis (FR)
(72) Inventeur: BEAUBET, Margaux, 63500 Issoire (FR); CARRION, Julien, 63500 Issoire (FR)
(74) Mandataire: Valeo Visibility
(86) Numéro de dépôt international: PCT/EP2022/055015
(87) Numéro de publication internationale: WO 2022/184655

(56) Documents cités:
- WO-A1-2019/238671
- DE-B- 1 205 405
- JP-A- H11 300 235
- US-A- 5 865 376
- US-A1- 2018 201 232
- US-B1- 6 464 150

## Description

### Domaine technique

La présente divulgation concerne un dispositif de nettoyage, destiné à projeter un jet de fluide de nettoyage vers une surface à nettoyer d'un véhicule automobile, tel qu'une surface optique d'un capteur d'un système de détection optique, le dispositif de nettoyage comprenant un corps creux comportant un côté amont muni d'un orifice d'admission du fluide de nettoyage et un côté aval muni d'une buse d'éjection du fluide de nettoyage sous forme de jet en direction de la surface à nettoyer, le corps creux étant percé d'un conduit de distribution du fluide de nettoyage de l'orifice d'admission vers la buse d'éjection, et un élément de déflexion de jet de fluide de nettoyage agencé en aval de la buse d'éjection et configuré pour faire obstacle au jet de fluide éjecté par la buse d'éjection de façon à modifier l'orientation du jet de fluide par rapport à la surface à nettoyer.

### Technique antérieure

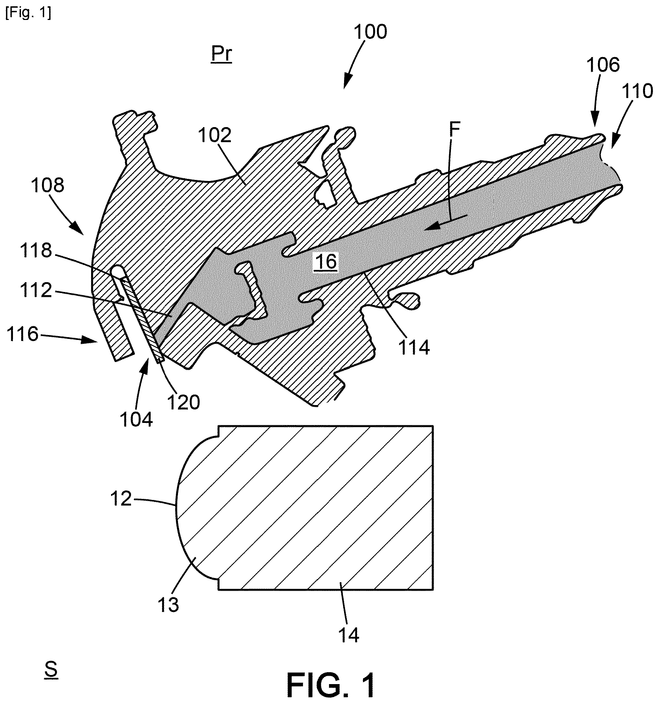

Un tel dispositif de nettoyage est connu du document FR 3 056 517 A1, cf. notamment les figures 1 à 3.

Dans ce dispositif de nettoyage connu, la buse d'éjection est réalisée dans un élément mobile télescopique qui, lors du nettoyage, est déployé hors d'un corps d'accueil creux. Grâce au déploiement de l'élément mobile, la buse d'éjection est amenée vers une position en surplomb de la surface à nettoyer. Ainsi, le jet de fluide de nettoyage éjecté par la buse atteint l'ensemble de la surface à nettoyer. Ceci assure un nettoyage convenable de toute la surface.

Néanmoins, ce type de dispositif de nettoyage télescopique est coûteux, complexe et fragile, en raison de sa cinématique, et du nombre important de pièces.

Le document DE 41 09 443 A1 montre un autre exemple de dispositif de nettoyage télescopique.

D'autres dispositifs de nettoyage sont décrits dans les publications US 5 865 376 A, US 2018 201232 A1, JPH 11 300235 A, US 6 464 150 B1, DE 1 205 405 B.

### Résumé

Un but de la présente divulgation est donc de proposer un dispositif de nettoyage qui soit plus simple, plus fiable et moins coûteux, tout en assurant un nettoyage efficace de l'ensemble de la surface à nettoyer.

Selon la présente divulgation, ce but est atteint par un dispositif de nettoyage tel que défini au paragraphe [0001] ci-dessus, qui est caractérisé en ce que l'élément de déflexion est apte à se déplacer, en fonction de la pression qu'il subit par le jet de fluide, entre une position rapprochée, dans laquelle l'élément de déflexion est proche de la buse d'éjection, et une position éloignée, dans laquelle l'élément de déflexion est écarté de la buse d'éjection.

Grâce à l'élément de déflexion mobile, l'orientation du jet de liquide par rapport à la surface à nettoyer peut modifier la zone d'impact du jet de fluide sur la surface à nettoyer. Il suffit de faire varier la pression du jet de fluide à sa sortie de buse. Ainsi, le jet de fluide est amené à balayer la surface à nettoyer, ce qui assure un nettoyage efficace. En même temps, avec le dispositif de nettoyage selon la présente divulgation, on peut se passer d'un mécanisme télescopique, ce qui réduit le coût et la complexité.

On comprend que dans la position éloignée, l'ouverture de sortie de la buse d'éjection est entièrement dégagée. Autrement dit, l'ouverture de sortie de la buse est entièrement libérée de l'élément de déflexion. On comprend que dans la position éloignée, l'élément de déflexion n'interfère pas avec le jet de fluide au niveau de l'ouverture de sortie de la buse déjection.

On comprend, dans la position éloignée, l'élément de déflexion est à distance de la buse d'éjection. En particulier, dans la position éloignée, l'élément de déflexion est à distance de l'ouverture de sortie de la buse d'éjection.

Par exemple, l'élément de déflexion est disposé à une distance prédéterminée de la buse d'éjection.

Les caractéristiques exposées dans les paragraphes suivants peuvent, optionnellement, être mises en œuvre, indépendamment les unes des autres ou en combinaison les unes avec les autres :
Une course de déplacement de l'élément de déflexion entre la position rapprochée et la position éloignée est courbe ;
Selon l'invention, la buse d'éjection est immobile par rapport à la surface à nettoyer ;
L'élément de déflexion comprend une lamelle ;
On comprend que l'élément de déflexion comprend une portion allongée ;
L'élément de déflexion obture la buse d'éjection en position rapprochée ;
Le dispositif de nettoyage comprend une butée qui limite le déplacement de l'élément de déflexion, l'élément de déflexion étant en appui sur la butée en position éloignée ;
Dans la position éloignée, la distance entre la buse et l'élément de déflexion est déterminée par la position de la butée ;
Dans la position éloignée, la lamelle est en appui contre la butée.

La butée et le corps creux sont d'un seul tenant ;
L'élément de déflexion a une première extrémité par laquelle il est fixé au corps creux, et une deuxième extrémité libre à l'opposé de la première extrémité ;
On entend par deuxième extrémité de l'élément de déflexion, une portion d'extrémité de la lamelle ;
On comprend que la portion allongée de l'élément de déflexion s'étend entre la première extrémité et la deuxième extrémité ;
On comprend que dans la position rapprochée, la deuxième extrémité est configurée pour obturer la buse d'éjection ;
On comprend que la deuxième extrémité est configurée pour se déplacer entre la position éloignée et la position rapprochée ;
On comprend que la course de déplacement de la deuxième extrémité est courbe ; l'élément de déflexion est un élément flexible qui se déforme élastiquement sous la pression exercée par le jet de fluide ;
Dans la position éloignée, la lamelle de l'élément de déflexion comprend une portion courbée.

Au cours du déplacement de la lamelle de la position rapprochée à la position éloignée, une portion de la lamelle est configurée pour s'incurver.

Le déplacement de l'élément de déflexion est un pivotement autour d'une liaison pivot ;
L'élément de déflexion comprend un moyen de rappel vers la position rapprochée, tel qu'un ressort ;
La lamelle est rigide ;
L'élément de déflexion est réalisé en carbone, en acier inoxydable, en élastomère ou en plastique.

La présente divulgation concerne également un système de détection optique pour véhicule automobile, comportant un capteur pourvu d'une surface optique, et un dispositif de nettoyage de la surface optique tel que défini ci-dessus.

### Brève description des dessins

D'autres caractéristiques, détails et avantages apparaîtront à la lecture de la description détaillée ci-après, et à l'analyse des dessins annexés, sur lesquels :
**Fig. 1**
   [Fig. 1] est une vue en coupe d'un premier mode de réalisation d'un dispositif de nettoyage selon la présente divulgation avec un élément de déflexion en position rapprochée.
**Fig. 2**

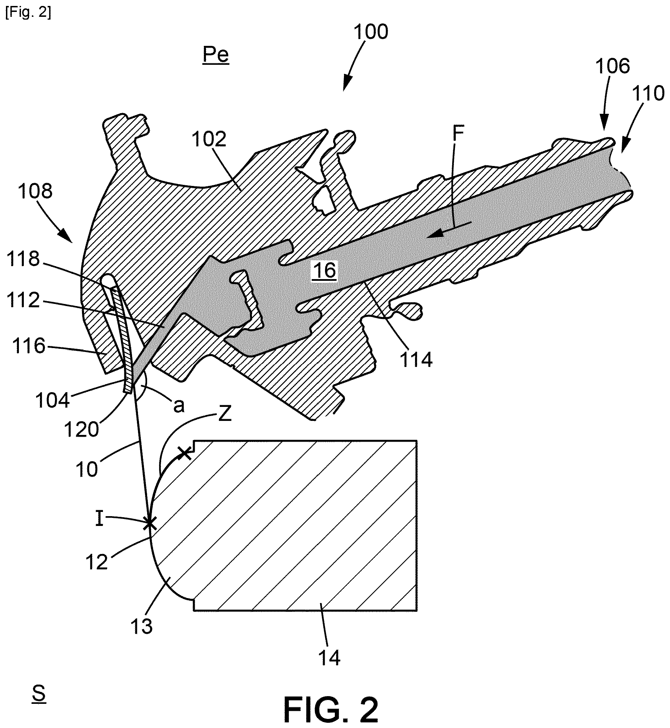

   [Fig. 2] est une vue en coupe du premier mode de réalisation de la figure 1 avec l'élément de déflexion en position éloignée.
**Fig. 3**

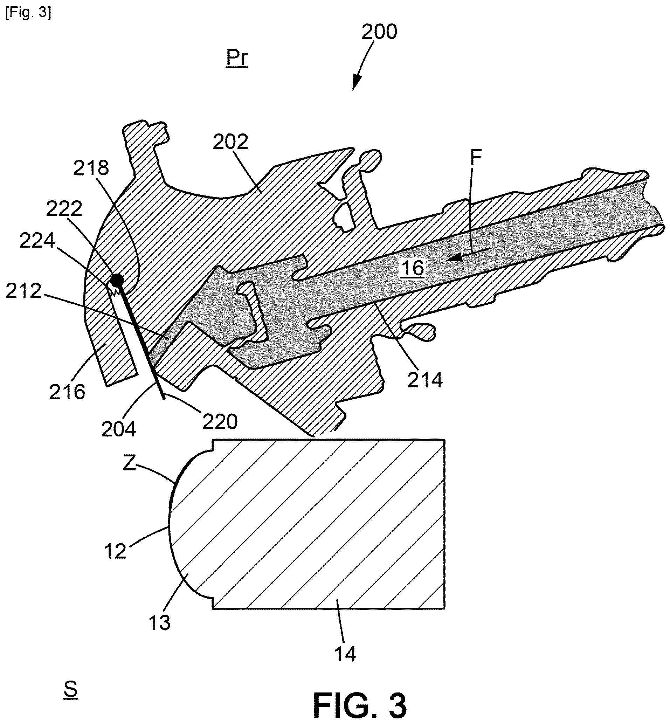

   [Fig. 3] est une vue en coupe d'un deuxième mode de réalisation du dispositif de nettoyage selon la présente divulgation avec un élément de déflexion en position rapprochée.
**Fig. 4**

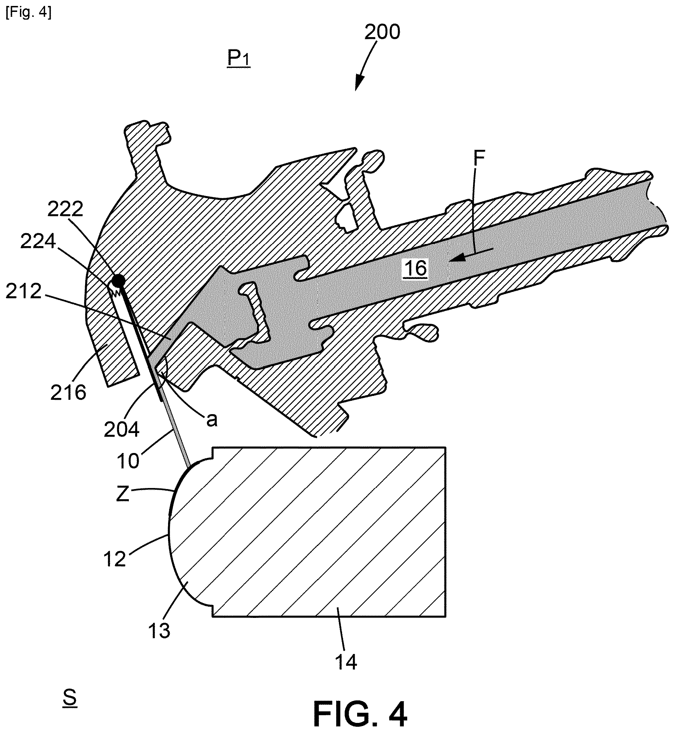

   [Fig. 4] est une vue en coupe du deuxième mode de réalisation de la figure 3 avec l'élément de déflexion dans une première position intermédiaire.
**Fig. 5**

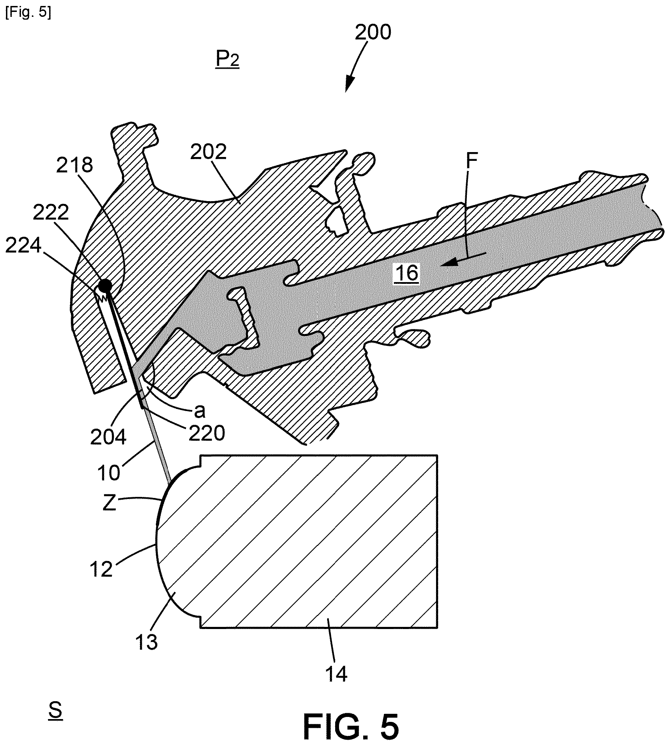

   [Fig. 5] est une vue en coupe du deuxième mode de réalisation de la figure 3 avec l'élément de déflexion dans une deuxième position intermédiaire.
**Fig. 6**

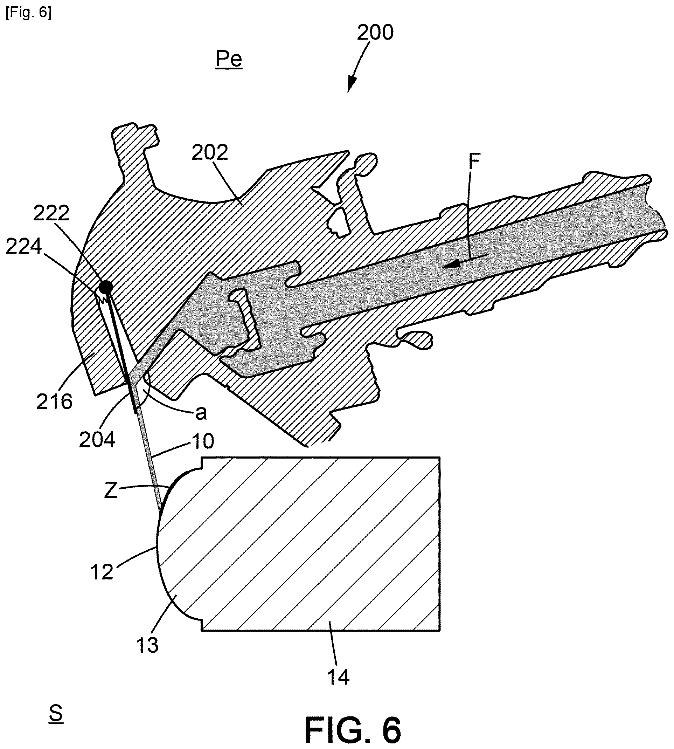

   [Fig. 6] est une vue en coupe du deuxième mode de réalisation de la figure 3 avec l'élément de déflexion en position éloignée.

### Description des modes de réalisation

Les dispositifs de nettoyage 100, 200 illustrés par les figures 1 à 6 sont destinés à projeter un jet 10 de fluide de nettoyage vers une surface 12 à nettoyer d'un véhicule automobile, tel qu'une surface optique d'un capteur 14 d'un système de détection optique. Typiquement, ces dispositifs de nettoyage 100, 200 sont montés sur un véhicule automobile à proximité d'un capteur 14 associé à nettoyer.

Dans le présent contexte, on appelle système de détection optique tout système comportant un ou plusieurs capteurs optiques tels que des caméras, des capteurs laser (communément appelés LIDAR) ou autres capteurs basés sur l'émission et/ou la détection de la lumière dans le spectre visible ou invisible pour l'Homme, en particulier l'infrarouge. De tels systèmes de détection optiques équipent un nombre de plus en plus grand de véhicules automobiles afin d'aider le conducteur du véhicule dans certaines situations de conduite, dont une, bien connue, est l'aide au stationnement. Pour que cette aide soit la plus efficace possible, les données fournies par le système de détection optique doivent être de la meilleure qualité possible, et il est donc indispensable de disposer d'optiques propres pour réaliser ces acquisitions de données.

Pour ce faire, les dispositifs de nettoyage 100, 200 selon la présente divulgation peuvent être commandés pour asperger la surface 12 à nettoyer (par exemple la surface d'une lentille 13 de caméra 14 de prise de vues) d'un fluide nettoyant, par exemple juste avant que soit réalisée la détection (par exemple la prise de vue).

Les figures 1 et 2 illustrent un premier mode de réalisation 100 du dispositif de nettoyage selon la présente divulgation.

Le dispositif de nettoyage 100 comprend un corps creux 102, ainsi qu'un élément de déflexion 104 monté sur le corps creux 102.

Le corps creux 102 comporte un côté amont 106 et un côté aval 108. Les positions « amont » et « aval » sont définis par rapport à la direction F d'écoulement de fluide au sein du corps creux 102. Le côté amont 106 du corps creux 102 est muni d'un orifice 110 d'admission de fluide de nettoyage 16. Le côté aval 108 est muni d'une buse 112 d'éjection du fluide de nettoyage 16 sous forme de jet 10. Le corps creux 102 est percé d'un conduit 114 de distribution du fluide de nettoyage 16 de l'orifice d'admission 110 vers la buse d'éjection 112. La buse d'éjection 112 est pratiquée dans le corps creux 102. Une butée 116 est agencée en vis-à-vis de la buse d'éjection 112. De préférence, la butée 116 et le corps creux 102 sont d'un seul tenant. Alternativement, la butée 116 et le corps creux 102 peuvent prendre la forme de deux pièces individuelles, l'une fixée à l'autre.

L'élément de déflexion 104 est agencé en aval de la buse d'éjection 112 et configuré pour faire obstacle au jet de fluide 10 éjecté par la buse d'éjection 112 de façon à modifier l'orientation du jet de liquide par rapport à la surface à nettoyer 12. L'élément de déflexion 104 est apte à se déplacer, en fonction de la pression qu'il subit par le jet de fluide 10, entre une position rapprochée Pr montrée à la figure 1, et une position éloignée Pe montrée à la figure 2. Dans la position rapprochée Pr, cf. la figure 1, l'élément de déflexion 104 est proche de la buse d'éjection 112. Dans la position éloignée Pe, cf. la figure 2, l'élément de déflexion 104 est écarté de la buse d'éjection 112.

Dans l'exemple montré aux figures 1 et 2, l'élément de déflexion 104 est réalisé sous forme d'une lamelle. Cette lamelle 104 a une première extrémité 118, par laquelle elle est fixée au corps creux 102. Elle dispose également d'une deuxième extrémité libre 120 à l'opposé de la première extrémité 118.

La lamelle 104 peut être réalisée, entre autres, en carbone, en acier inoxydable, en élastomère ou en plastique.
Selon le premier mode de réalisation des figures 1 et 2, la lamelle 104 est un élément flexible qui se déforme élastiquement sous la pression exercée par le jet de fluide 10. Autrement dit, ladite lamelle 104 est apte à se déplacer par déformation élastique en fonction de la pression qu'elle subit par le jet de fluide 10, entre une position rapprochée Pr montrée à la figure 1, et une position éloignée Pe montrée à la figure 2. La déformation élastique de la lamelle 104 consiste par exemple en ce qu'une portionde ladite lamelle s'incurve en fonction de la pression qu'elle subit par le jet de fluide 10. Ainsi, lorsque la lamelle 104 occupe la position éloignée Pe, au moins une portion de celle-ci présente une courbure.

Les figures 1 et 2 montrent non seulement le dispositif de nettoyage 100 mais également un capteur optique 14 à nettoyer par le dispositif de nettoyage 100. Typiquement, le dispositif de nettoyage 100 et le capteur optique 14 sont tous les deux montés ensemble dans un véhicule automobile, à proximité l'un de l'autre. Le dispositif de nettoyage 100 et le capteur optique 14 forment ainsi un système de détection optique S.

Le capteur optique 14 est par exemple une caméra qui dispose d'une lentille 13. Ici, c'est la surface convexe 12 de la lentille 13 qui est nettoyée par le dispositif de nettoyage 100.

On va maintenant décrire le fonctionnement du dispositif de nettoyage 100 des figures 1 et 2.

Lorsque le dispositif de nettoyage 100 est au repos, la lamelle 104 est en position rapprochée Pr (cf. la figure 1) et obture la buse d'éjection 112. Quand le dispositif de nettoyage 100 est mis en route en pompant du fluide de nettoyage 16 vers la buse d'éjection 112, la pression hydraulique au sein du conduit de distribution 114 augmente. Cette pression est subie par la lamelle 104. En conséquence, au fur et à mesure que la pression augmente, la lamelle 104 se déforme élastiquement et son extrémité libre 120 s'écarte de la buse d'éjection 112.

L'ouverture de sortie de la buse d'éjection 112 est donc libérée et un jet 10 de fluide de nettoyage est éjecté de la buse 112, vient taper contre l'extrémité libre 120 de la lamelle 104, et est dévié en direction de la surface optique 12.

La lamelle 104 continue à se déformer jusqu'à ce que l'extrémité libre 120 vienne en appui contre la butée 116. La butée 116 limite la déformation de la lamelle 104, qui se trouve alors en position éloignée Pe (cf. la figure 2). Lors du déplacement de la lamelle 104 de la position rapprochée Pr vers la position éloignée Pe, l'angle de déviation a (cf. la figure 2) du jet de fluide 10 varie d'une valeur minimale vers une valeur maximale. Par conséquent, le point d'impact l du jet de fluide 10 sur la surface optique 12 change. En d'autres termes, lors du nettoyage, le jet de fluide 10 balaye une zone Z de la surface optique 12 à nettoyer. Aussi, le nettoyage de la surface optique 12 se trouve amélioré.

On aura donc compris que l'élément de déflexion mobile 104 permet de modifier l'orientation du jet de fluide 10 par rapport à la surface à nettoyer 12 et ainsi d'asperger toute une zone Z de la surface 12 à nettoyer.

En prévoyant différents modes de contrôle d'une pompe acheminant le fluide de nettoyage 16 vers le corps creux 102, on pourra réaliser différents programmes de nettoyage. Par exemple, on peut prévoir un programme de nettoyage avec un pompage intermittent de la pompe qui résulte en un mouvement de va-et-vient ou de battement de la lamelle 104 entre ces deux positions extrêmes Pr et Pe et ainsi en un balayage multiple de la zone de nettoyage Z par le jet de fluide 10.

En outre, on pourra adapter la souplesse de la lamelle 104 en fonction de l'application spécifique désirée. Ainsi, en lui donnant une souplesse déterminée, on pourra ajuster le comportement de la lamelle 104 en fonction de la pression exercée par le jet de fluide 10. De cette façon, il est possible de modifier le balayage effectué par la lamelle 104.

On notera que, contrairement aux dispositifs connus de nettoyage à déploiement télescopique, selon la présente divulgation, la buse d'éjection 112 reste immobile par rapport à la surface à nettoyer 12 lors de la mise en action du dispositif de nettoyage tout comme lorsque le dispositif de nettoyage 100 est au repos.

En référence aux figures 3 à 6, on va maintenant décrire un deuxième mode de réalisation 200 du dispositif de nettoyage selon la présente divulgation. On insistera ici uniquement sur les différences du deuxième de réalisation 200 par rapport au premier mode de réalisation 100. Pour les éléments similaires, il est fait référence à la description ci-dessus et aux figures 1 et 2.

Dans ce second mode de réalisation, la lamelle 204 est un élément rigide. La lamelle rigide 204 se déplace, entre une position rapprochée Pr montrée à la figure 3 et une position éloignée Pe montrée à la figure 6, par un pivotement autour d'une liaison pivot 222. La lamelle rigide 204 est fixée au corps creux 202 à l'aide de la liaison pivot 222 qui se situe au niveau de la première extrémité 218 de la lamelle rigide 204. Un moyen de rappel 224 (ici, un ressort) de la lamelle 204 vers la position rapprochée Pe est prévu entre la lamelle 204 et le corps creux 202. Une première extrémité du moyen de rappel 224 s'appuie contre le corps creux 202, et une deuxième extrémité du moyen de rappel 224 s'appuie contre la lamelle rigide 204. Dans ce second mode de réalisation, on comprend que l'élément de déflexion comprend la lamelle rigide 204, la liaison pivot 222 et le moyen de rappel 224.

Le deuxième mode de réalisation 200 fonctionne de la manière suivante :

En situation de repos, montrée à la figure 3, la lamelle rigide 204 est en position rapprochée Pr et obture la buse d'éjection 212. Lorsque la surface optique 12 doit être nettoyée, du fluide de nettoyage 16 est pompé vers la buse d'éjection 212. La pression accrue qui s'ensuit agit sur la lamelle 204 qui commence alors à s'écarter de la buse d'éjection 212. Ainsi, la lamelle 204 pivote de sa position rapprochée Pr (cf. la figure 3) vers sa position écartée Pe (cf. la figure 6), pour finalement se plaquer contre la butée 216. Lors de cette course, la lamelle 204 traverse des positions intermédiaires. Deux de ses positions intermédiaires P1 et P2 sont montrées aux figures 4 et 5. La lamelle 204 pivote donc de la position Pr à la position P1, puis à la position P2, et termine sa course en position Pe. Il s'ensuit une déviation décroissante du jet de fluide 10 qui, par conséquent, balaye toute une zone Z de la surface optique 12. L'angle de déviation changeant du jet de fluide 10 est indiqué dans les figures 4 à 6 par la référence a. En fin de nettoyage, le pompage de fluide de nettoyage 16 est arrêté et la lamelle 204 retourne dans sa position rapprochée Pr par l'action du ressort de rappel 224.

On pourra adapter la raideur du ressort de rappel 224 en fonction de l'application spécifique désirée. Ainsi, en choisissant une raideur de ressort déterminée, on pourra ajuster le comportement de la lamelle 204 en fonction de la pression exercée par le jet de fluide 10. De cette façon, il est possible de modifier le balayage effectué par la lamelle 204.

Le dispositif de nettoyage 100, 200 selon la présente divulgation est avantageux, notamment en ce qu'il comporte peu de composants et peu de pièces en mouvement. En outre, il est peu coûteux, peu encombrant et facilement intégrable.

## Revendications

1. Dispositif de nettoyage (100), destiné à projeter un jet (10) de fluide de nettoyage (16) vers une surface à nettoyer (12) d'un véhicule automobile, tel qu'une surface optique d'un capteur (14) d'un système de détection optique (S), le dispositif de nettoyage (100) comprenant :
a. un corps creux (102) comportant un côté amont (106) muni d'un orifice (110) d'admission du fluide de nettoyage (16) et un côté aval (108) muni d'une buse (112) d'éjection du fluide de nettoyage sous forme de jet (10) en direction de la surface à nettoyer (12), le corps creux (102) étant percé d'un conduit (114) de distribution du fluide de nettoyage de l'orifice d'admission (110) vers la buse d'éjection (112) ; et
b. un élément (104) de déflexion de jet de fluide de nettoyage agencé en aval de la buse d'éjection (112) et configuré pour faire obstacle au jet de fluide (10) éjecté par la buse d'éjection (112) de façon à modifier l'orientation du jet de fluide (10) par rapport à la surface à nettoyer (12),
l'élément de déflexion (104) étant apte à se déplacer, en fonction de la pression qu'il subit par le jet de fluide (10), entre :
- une position rapprochée (Pr), dans laquelle l'élément de déflexion (104) est proche de la buse d'éjection (112) ; et
- une position éloignée (Pe), dans laquelle l'élément de déflexion (104) est écarté de la buse d'éjection (112), **caractérisé en ce que** la buse d'éjection (112) est immobile par rapport à la surface à nettoyer (12), et **en ce que** grâce à l'élément de déflexion mobile la zone d'impact dudit jet de fluide (10) sur la surface à nettoyer (12) varie selon la pression du jet de fluide (10) au niveau de la sortie de la buse (112).

2. Dispositif de nettoyage (100) selon la revendication 1, dans lequel l'élément de déflexion (104) comprend une portion allongée.

3. Dispositif de nettoyage (100) selon l'une quelconque des revendications précédentes, dans lequel l'élément de déflexion (104), lorsque disposé dans la position éloignée (Pe), est à distance d'une ouverture de sortie de la buse d'éjection (112), de sorte à ce que la buse (112) d'éjection soit entièrement dégagée par l'élément de déflexion (104).

4. Dispositif de nettoyage (100) selon l'une quelconque des revendications précédentes, dans lequel une course de déplacement de l'élément de déflexion (104) entre la position rapprochée et la position éloignée est courbe.

5. Dispositif de nettoyage (100) selon l'une quelconque des revendications précédentes, dans lequel l'élément de déflexion (104) obture la buse d'éjection (112) en position rapprochée (Pr).

6. Dispositif de nettoyage (100) selon l'une quelconque des revendications précédentes, comprenant en outre une butée (116) qui limite le déplacement de l'élément de déflexion (104), l'élément de déflexion étant en appui sur la butée (116) en position éloignée (Pe).

7. Dispositif de nettoyage (100) selon la revendication précédente, dans lequel la butée (116) et le corps creux (102) sont d'un seul tenant.

8. Dispositif de nettoyage (100) selon l'une quelconque des revendications précédentes, dans lequel l'élément de déflexion (104) a une première extrémité (118) par laquelle il est fixé au corps creux (102), et une deuxième extrémité libre (120) à l'opposé de la première extrémité (118).

9. Dispositif de nettoyage (100) selon l'une quelconque des revendications précédentes, dans lequel l'élément de déflexion (104) est un élément flexible qui se déforme élastiquement sous la pression exercée par le jet de fluide (10).

10. Dispositif de nettoyage (200) selon l'une quelconque des revendications précédentes, comprenant en outre un moyen (224) de rappel de l'élément de déflexion (204) vers sa position rapprochée (Pr), tel qu'un ressort.

11. Dispositif de nettoyage (100) selon l'une quelconque des revendications précédentes, dans lequel l'élément de déflexion (104) est réalisé en carbone, en acier inoxydable, en élastomère ou en plastique.

12. Système de détection optique (S) pour véhicule automobile, comportant un capteur (14) pourvu d'une surface optique (12), et un dispositif (100) de nettoyage de la surface optique (12) selon l'une quelconque des revendications précédentes.

## Patentansprüche

1. Reinigungsvorrichtung (100), die dazu bestimmt ist, einen Strahl (10) aus Reinigungsflüssigkeit (16) auf eine zu reinigende Oberfläche (12) eines Kraftfahrzeugs zu richten, wie beispielsweise eine optische Oberfläche eines Sensors (14) eines optischen Erkennungssystems (S), wobei die Reinigungsvorrichtung (100) umfasst:
a. einen Hohlkörper (102) mit einer stromaufwärtigen Seite (106), die mit einer Einlassöffnung (110) für die Reinigungsflüssigkeit (16) versehen ist, und einer stromabwärtigen Seite (108), die mit einer Düse (112) zum Ausstoßen der Reinigungsflüssigkeit in Form eines Strahls (10) in Richtung der zu reinigenden Oberfläche (12) versehen ist, wobei der Hohlkörper (102) mit einem Kanal (114) zur Verteilung der Reinigungsflüssigkeit von der Einlassöffnung (110) zur Ausstoßdüse (112) durchbohrt ist; und
b. ein Element (104) zur Umlenkung des Reinigungsflüssigkeitsstrahls, das stromabwärts der Ausstoßdüse (112) angeordnet und dazu konfiguriert ist, dem von der Ausstoßdüse (112) ausgestoßenen Flüssigkeitsstrahl (10) entgegenzuwirken, um die Ausrichtung des Flüssigkeitsstrahls (10) in Bezug auf die zu reinigende Oberfläche (12) zu verändern,
wobei das Umlenkelement (104) in der Lage ist, sich in Abhängigkeit des durch den Flüssigkeitsstrahl (10) ausgeübten Drucks zu bewegen, zwischen:
- einer angenäherten Position (Pr), in der das Umlenkelement (104) nahe an der Ausstoßdüse (112) ist; und
einer entfernten Position (Pe), in der das Umlenkelement (104) von der Ausstoßdüse (112) beabstandet ist, **dadurch gekennzeichnet, dass**
die Ausstoßdüse (112) in Bezug auf die zu reinigende Oberfläche (12) unbeweglich ist,
und dass dank des beweglichen Umlenkelements
der Auftreffbereich des besagten Flüssigkeitsstrahls (10) auf der zu reinigenden Oberfläche (12)
je nach dem Druck des Flüssigkeitsstrahls (10) am Ausgang der Düse (112) variiert.

2. Reinigungsvorrichtung (100) nach Anspruch 1, bei der das Umlenkelement (104) einen länglichen Abschnitt umfasst.

3. Reinigungsvorrichtung (100) nach einem der vorhergehenden Ansprüche, bei der das Umlenkelement (104), wenn es sich in der entfernten Position (Pe) befindet, von einer Austrittsöffnung der Ausstoßdüse (112) beabstandet ist, sodass die Ausstoßdüse (112) durch das Umlenkelement (104) vollständig freigegeben ist.

4. Reinigungsvorrichtung (100) nach einem der vorhergehenden Ansprüche, bei der ein Bewegungshub des Umlenkelements (104) zwischen der angenäherten Position und der entfernten Position kurvenförmig ist.

5. Reinigungsvorrichtung (100) nach einem der vorhergehenden Ansprüche, bei der das Umlenkelement (104) die Ausstoßdüse (112) in der angenäherten Position (Pr) verschließt.

6. Reinigungsvorrichtung (100) nach einem der vorhergehenden Ansprüche, die ferner einen Anschlag (116) umfasst, der die Bewegung des Umlenkelements (104) begrenzt, wobei das Umlenkelement in der entfernten Position (Pe) an dem Anschlag (116) anliegt.

7. Reinigungsvorrichtung (100) nach dem vorhergehenden Anspruch, bei der der Anschlag (116) und der Hohlkörper (102) einstückig ausgebildet sind.

8. Reinigungsvorrichtung (100) nach einem der vorhergehenden Ansprüche, bei der das Umlenkelement (104) ein erstes Ende (118) aufweist, mit dem es am Hohlkörper (102) befestigt ist, und ein zweites freies Ende (120) gegenüber dem ersten Ende (118).

9. Reinigungsvorrichtung (100) nach einem der vorhergehenden Ansprüche, bei der das Umlenkelement (104) ein flexibles Element ist, das sich unter dem durch den Flüssigkeitsstrahl (10) ausgeübten Druck elastisch verformt.

10. Reinigungsvorrichtung (200) nach einem der vorhergehenden Ansprüche, die ferner ein Mittel (224) zur Rückführung des Umlenkelements (204) in seine angenäherte Position (Pr) umfasst, wie beispielsweise eine Feder.

11. Reinigungsvorrichtung (100) nach einem der vorhergehenden Ansprüche, bei der das Umlenkelement (104) aus Kohlenstoff, Edelstahl, Elastomer oder Kunststoff hergestellt ist.

12. Optisches Erkennungssystem (S) für ein Kraftfahrzeug, das einen Sensor (14) mit einer optischen Oberfläche (12) und eine Vorrichtung (100) zur Reinigung der optischen Oberfläche (12) nach einem der vorhergehenden Ansprüche umfasst.

## Claims

1. Cleaning device (100), intended to project a jet (10) of cleaning fluid (16) towards a surface to be cleaned (12) of a motor vehicle, such as an optical surface of a sensor (14) of an optical detection system (S), the cleaning device (100) comprising:
a. a hollow body (102) having an upstream side (106) provided with an inlet orifice (110) for the cleaning fluid (16) and a downstream side (108) provided with a nozzle (112) for ejecting the cleaning fluid in the form of a jet (10) towards the surface to be cleaned (12), the hollow body (102) being pierced by a conduit (114) for distributing the cleaning fluid from the inlet orifice (110) to the ejection nozzle (112); and
b. a cleaning fluid jet deflection element (104) arranged downstream of the ejection nozzle (112) and configured to obstruct the fluid jet (10) ejected by the ejection nozzle (112) so as to modify the orientation of the fluid jet (10) relative to the surface to be cleaned (12),
the deflection element (104) being able to move, depending on the pressure it undergoes from the fluid jet (10), between:
- a proximate position (Pr), in which the deflection element (104) is close to the ejection nozzle (112); and
- a distal position (Pe), in which the deflection element (104) is spaced away from the ejection nozzle (112), **characterised in that**
the ejection nozzle (112) is stationary relative to the surface to be cleaned (12),
and **in that** by virtue of the movable deflection element,
the impact zone of said fluid jet (10) on the surface to be cleaned (12)
varies according to the pressure of the fluid jet (10) at the outlet of the nozzle (112).

2. Cleaning device (100) according to Claim 1, wherein the deflection element (104) comprises an elongated portion.

3. Cleaning device (100) according to any one of the preceding claims, wherein the deflection element (104), when disposed in the distal position (Pe), is at a distance from an outlet opening of the ejection nozzle (112), such that the ejection nozzle (112) is entirely cleared by the deflection element (104).

4. Cleaning device (100) according to any one of the preceding claims, wherein a travel path of the deflection element (104) between the proximate position and the distal position is curved.

5. Cleaning device (100) according to any one of the preceding claims, wherein the deflection element (104) closes off the ejection nozzle (112) in the proximate position (Pr).

6. Cleaning device (100) according to any one of the preceding claims, further comprising a stop (116) that limits the movement of the deflection element (104), the deflection element resting against the stop (116) in the distal position (Pe).

7. Cleaning device (100) according to the preceding claim, wherein the stop (116) and the hollow body (102) are formed as a single piece.

8. Cleaning device (100) according to any one of the preceding claims, wherein the deflection element (104) has a first end (118) by which it is attached to the hollow body (102), and a second free end (120) opposite the first end (118).

9. Cleaning device (100) according to any one of the preceding claims, wherein the deflection element (104) is a flexible element that elastically deforms under the pressure exerted by the fluid jet (10).

10. Cleaning device (200) according to any one of the preceding claims, further comprising a means (224) for returning the deflection element (204) towards its proximate position (Pr), such as a spring.

11. Cleaning device (100) according to any one of the preceding claims, wherein the deflection element (104) is made of carbon, stainless steel, elastomer or plastic.

12. Optical detection system (S) for a motor vehicle, comprising a sensor (14) provided with an optical surface (12), and a device (100) for cleaning the optical surface (12) according to any one of the preceding claims.
